(19) Europäisches Patentamt
European Patent Office
Office européen des brevets

(11) **EP 4 524 833 A1**

(12) **EUROPEAN PATENT APPLICATION**

(43) Date of publication:
**19.03.2025 Bulletin 2025/12**

(21) Application number: **23198018.6**

(22) Date of filing: **18.09.2023**

(51) International Patent Classification (IPC):
**G06N 20/00** (2019.01)

(52) Cooperative Patent Classification (CPC):
**G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Siemens Mobility GmbH**
**81739 München (DE)**

(72) Inventors:
- **Geerkens, Simon**
**40476 Düsseldorf (DE)**
- **Waschulzik, Thomas**
**85354 Freising (DE)**
- **Sieberichs, Christian**
**40470 Düsseldorf (DE)**

(74) Representative: **Siemens Patent Attorneys**
**Postfach 22 16 34**
**80506 München (DE)**

(54) **ASSESSMENT OF MACHINE-LEARNING ALGORITHMS**

(57) The disclosure pertains to assessment of machine-learning algorithms such as deep neural networks. A data structure is constructed based on local complexity indicators determined for multiple input datapoints that are associated with an input to an intermediate layer of the machine-learning algorithm. The data structure can be plotted.

FIG 4

EP 4 524 833 A1

**Description**

TECHNICAL FIELD

Various examples of the disclosure pertain to enabling and implementing assessment of a deep neural network algorithm or another machine-learning algorithm comprising a pipeline of multiple layers.

TERMINOLOGY

Independent of the grammatical term usage, individuals with male, female or other gender identities are included within the term.

BACKGROUND

The number of application fields and use cases which employ machine-learning algorithms - e.g., deep neural networks (or simply neural networks) - is widely increased over the past few years.
For example, in the context of autonomous control of trains, neural networks can be used for a variety of tasks such as object detection, segmentation of objects of a certain type, track monitoring, and predictive maintenance.
For example, object detection can be used to identify obstacles or other trains on the tracks, while track monitoring can be used to detect defects in the tracks or to monitor the condition of the train as it travels along the rails. A segmentation mask can be output that segments objects of a certain type in an input image. Predictive maintenance can be used to predict when components of the train might fail, allowing for proactive maintenance to be scheduled before a breakdown occurs.
Neural networks are generally well-suited for these tasks because they are able to process large amounts of data quickly and can learn complex patterns and relationships within the data. This allows them to make accurate predictions and decisions based on real-time data from the train's sensors and other sources.
Due to the complexity of neural networks, it is not always possible to understand why the neural network makes a certain prediction. Oftentimes, a deep neural network is treated as a black box. This similarly applies to other types of machine-learning algorithms.

SUMMARY

There is a need for advanced techniques of assessing neural network and other types of machine-learning algorithms. There is, in particular, a need for monitoring predictions made by neural networks and other types of machine-learning algorithms during inference.
This need is met by the features of the independent claims.
A computer-implemented method of enabling assessment of processing of a plurality of datasets in a machine-learning algorithm is disclosed. Each dataset of the plurality of datasets includes a respective input datapoint in an input space and an associated output datapoint in an output space. The input datapoints of the plurality of datasets are patches of a predefined size of input data of an intermediate layer of a machine-learning algorithm. The input data is obtained by processing root data using an input layer of the machine-learning algorithm; optionally, one or more upstream intermediate layers of the machine-learning algorithm are used. The output datapoints of the plurality of datasets are outputs of the intermediate layer; the output datapoints are calculated based on the patches. The method includes, for each dataset of the plurality of datasets: determining multiple local complexity indicators for multiple neighborhoods of the input datapoint of the respective dataset in the input space. The multiple neighborhoods have different sizes. Any given local complexity indicator is based on differences between input distances and output distances, the input distances being in the input space between the input datapoint of the respective dataset and the input datapoints of each of multiple further datasets in the respective neighborhood, the output distances being in the output space between the output datapoint of the respective dataset and the output datapoints of each of the multiple further datasets in the respective neighborhood. The method further includes determining a data structure comprising at least a first dimension and a second dimension, the first dimension resolving the multiple neighborhoods based on their sizes, the second dimension resolving the local complexity indicators. Entries of the data structure are indicative of a frequency of occurrence of the respective local complexity indicator at the respective size of the neighborhoods across all datasets of the plurality of datasets. The method also includes accessing the data structure to assess the machine-learning algorithm.
A processing device comprising a processor and a memory is provided. The processor is configured to load program code from the memory and to execute the program code. The processor, upon executing the program code, is configured to perform the method according to claim 1.
A computer program includes program code that is executable by a processor. The processor, upon executing the program code, is configured to perform the method according to claim 1.It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1A schematically illustrates multiple datasets and a neighborhood of a given dataset of the multiple datasets.

FIG. 1B schematically illustrates multiple datasets and a neighborhood of a given dataset of the multiple datasets.

FIG. 2 schematically illustrates a processing device according to various examples.

FIG. 3 is a flowchart of a method according to various examples.

FIG. 4 illustrates a plot of a data structure according to various examples as well as associated feature relevance information.

FIG. 5 illustrates a plot of a data structure according to various examples as well as associated feature relevance information.

FIG. 6 illustrates a plot of a data structure according to various examples.

DETAILED DESCRIPTION

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), a tensor processing unit (TPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which co-act with one another to perform operation(s) disclosed herein. In addition, any one or more of the electrical devices may be configured to execute a program code that is embodied in a non-transitory computer readable medium programmed to perform any number of the functions as disclosed.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, techniques that facilitate assessment of multiple datasets that are characteristic of a prediction made by a machine-learning algorithm (e.g., a neural network to which reference will be primarily made) will be disclosed. The datasets are input-output datasets, i.e., each dataset includes a pair of an input datapoint and an output datapoint. Thereby, the machine-learning algorithm can be assessed. For instance, it can be determined whether predictions made by the machine-learning algorithm are reliable/trustworthy.

Hereinafter, reference will be made to neural network algorithms as a possible implementation of a machine-learning algorithm, but the techniques may be equally applicable to other types of machine-learning algorithms.

According to various examples, calculations executed by an intermediate or hidden layer of a neural network are analyzed, in order to assess the neural network.

A hidden or intermediate layer of a neural network is a layer of nodes (also known as neurons) in between the input layer and the output layer, where the nodes are not directly connected to the external environment. The hidden layer receives inputs from the previous layer (either the input layer or a previous hidden layer) and applies a set of learned transformations to these inputs, generating an output that is then passed to the next layer in the network. The input data to an intermediate layer is obtained by processing roots data - input to the neural network - in an input layer of the neural network and optionally one more upstream intermediate layers (arranged in between the investigated intermediate layer and the input layer).

According to various examples, input data points of a plurality of data sets are patches of a predefined size of input data or of an intermediate layer of the neural network.

The patches can be, in other words, a subfraction of the entire input data of the intermediate layer. Thus, the dimensionality of an input datapoint is smaller than the dimensionality of the entire input data of the intermediate layer (and likewise for the output data). Various techniques are based on the finding that high dimensional input datapoints and output datapoints can be difficult to process. This is due to the curse of high dimensionality. As a general rule, the curse of high dimensionality is a phenomenon that occurs when datapoints having a large number of features. In high-dimensional spaces, the number of possible combinations of features grows exponentially with the number of dimensions, making it increasingly difficult to separate signal from noise or to find meaningful patterns in the data. Some of the challenges that arise in high-dimensional datapoints include: Sparsity: As the number of dimensions increases, the number of features required to accurately represent each datapoint grows exponentially. Computational complexity: The time and memory required to process and analyze the datapoints can become prohibitively large as the number of dimensions increases. Overfitting: In high-dimensional spaces, it becomes easier to fit a model to noise rather than signal, leading to poor generalization performance. Visualization: It becomes difficult to visualize high-dimensional datapoints and to identify meaningful patterns or relationships among the features. In particular, for higher dimensional datapoints, distances in the respective input space and output space do not significantly differ between datapoints. Accordingly, using patches of a predefined size of the input data to the intermediate layer (rather than to the entire input data of the intermediate layer), the dimensionality can be reduced and the analysis becomes more discriminative.

The output data points are outputs of the intermediate layer calculated based on the patches. Thus, by forming datasets including an input data point and an output data point corresponding to and respective input patch to the intermediate layer and an associated output of the intermediate layer, the calculation applied by the intermediate layer can be investigated and examined.

Various types of neural networks can be assessed using the techniques disclosed herein. For instance, neural networks solving classification tasks can be assessed. It would also be possible to assess neural networks that solve regression tasks. For instance, convolutional neural networks can be assessed that include one or more convolutional layers. In particular, neural networks can be assessed that solve image segmentation as classification task. Here, an image is divided into multiple segments or regions, each of which corresponds to a different object or part of the image. For instance, a segmentation mask can be defined that takes different values for different pixels of the image, thereby identifying whether a certain segment of the image is part of the target structure to be segmented or not. Segmentation tasks can be implemented using convolutional neural networks. One particular neural network architecture that can be employed is the U-Net architecture. The U-Net architecture includes two parts: an encoder and a decoder. The encoder is a series of convolutional and pooling layers that downsample the input image, while the decoder is a series of convolutional and upsampling layers that upsample the encoded image to the original resolution. The architecture is called "U-Net" because the encoder and decoder are connected by a U-shaped pathway. Specifically, the encoder gradually reduces the spatial dimensions of the input image, while increasing the number of channels. The decoder then reverses this process by upsampling the encoded image and reducing the number of channels. One of the key features of the U-Net architecture is the use of skip connections, which connect corresponding layers in the encoder and decoder. These connections allow the decoder to access features from earlier layers in the encoder, which can help to preserve spatial information and improve segmentation accuracy.

It can be assessed with the neural network makes a certain prediction. This can be referred to as "explainable artificial intelligence (XAI)". XAI is particularly important in situations where the output of an AI system can have significant consequences, such as control of a technical system based on predictions made by the neural network, e.g., for control of autonomous trains. In these domains, it is important to be able to understand how an AI system arrived at a particular decision or prediction, and to be able to verify that the system is making decisions that are fair, unbiased, and consistent with human values.

Next, aspects are disclosed that enable determining a data structure that practically enables the assessment of the neural network. Accessing the data structure facilitates XAI techniques. For example, by pre-generating the data structure, the subsequent assessment can be implemented using fewer computational resources by relying on the pre-computer data structure. The data structure is determined by comparing multiple datasets with each other. This is explained in detail hereinafter.

The data structure that is characteristic to the analysis disclosed herein tracks multiple local complexity indicators that are determined for each dataset of a plurality of datasets. For a given dataset, the multiple local complexity indicators are determined for multiple neighborhoods of that given dataset.

As a general rule, various kinds and types of local complexity indicators can be used. In some examples, local complexity indicators are based on differences between input and output distances between input/output datapoints of datasets in a certain neighborhood.

The neighborhood can be defined with respect to the input datapoint of a given dataset in the input space. Different criteria can be used to construct neighborhoods, e.g., k-nearest neighbors or distance in input space.

It is then possible to determine the data structure that stores the local complexity indicators.

The data structure can store the local complexity indicators in an aggregated manner. A histogram approach can be used where each entry of the datastructure is indicative of the frequency of occurrence of certain complexity indicators (lying within a certain bin) for a given neighborhood size.

Use of such data structure has the advantage that it can be quickly assessed how the various datapoints are arranged with respect to each other in input space and output space. Datasets that have comparable arrangements of the input and output datapoints in the input space and in the output space can be identified, because they are in the same bin. Thus, the data structure enables efficient assessment of the plurality of datasets. The data structure can be implemented as a two-dimensional representation and thus can be easily interpreted.

Next, details with respect to an example implementation of the local complexity indicators will be described. One type of local complexity indicator can be calculated according to:

$$QI^2R(P) = \frac{1}{|P^2|} \cdot \sum_{x \in P^2} (d_{NRE}(x) - d_{NRA}(x))^2$$

$$(1)$$

Here, P are all datasets in the respective neighborhood of the given dataset. $d_{NRE}$ is the distance between the input datapoint of the given dataset and the input datapoint of a respective dataset (x) in the neighborhood (normalized with respect to the average); $d_{NRA}$ is the distance between the output datapoint of the given dataset and the output datapoint of the respective dataset (normalized with respect to the average). The Euclidian distance or another distance metric may be considered. A difference of these distances is considered in Equation (1).

As a general rule, various options exist for determining the neighborhood (and with it P). For instance, k-nearest neighbors (KNN) may be considered which provides the so-called MLQI2 matrix:

$$mlqi^2[i,k](P) = QI^2(KNN_{re}(P, p_i, k))$$

$$(2)$$

The MLQI2 matrix describes the complexity of every dataset having index i for all neighborhoods k. Using neighborhoods defines based on the nearest neighbors is only one example. In another example, neighborhoods could be determined based on n-dimensional spheres (for an n-dimensional input space), wherein the spheres are progressively larger.

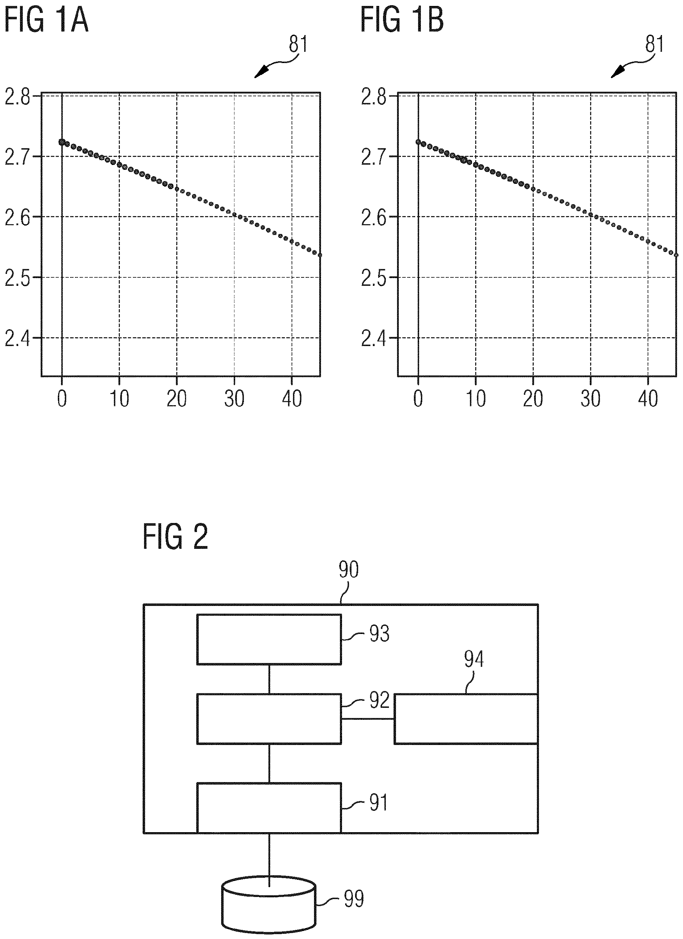

FIG. 1A is a plot 81 of multiple datasets (circles). This plot 81 provides the position of the input datapoints along x-axis and the position of the output datapoints along the Y-axis.

Also illustrated is the KNN for a certain dataset (large dark circle) with k=19. The datasets part of this neighborhood are emphasized in the plot.

To construct a data structure, it is necessary to compare the local complexity indicators for different datasets and neighborhoods. This is achieved using binning.

Here, each value of MLQI2 is associated with a respective bin

$$v = 0, 1, 2, \dots, \left\lceil \frac{max_{hi} - min_{hi}}{binsize_{hi}} \right\rceil$$

.

This yields the so-called HLQI2 ("H" for histogram);

$$hlqi^2[v,k](P) = \sum_{i=1}^{|P|} I^3(mlqi^2[i,k](P), v) \cdot blqi^2[i,k](P)$$

$$(3)$$

Here, the function $I^3(h, v)$ returns "1" if $v \leq \dfrac{h - min_{hi}}{binsize_{hi}} < v + 1$ holds true; or else returns "0". Thus, by means of the function it is checked whether the complexity of a given dataset $p_i$ is within a certain bin $[v|v + 1)$.

Finally, summing is executed across all datasets $p_i$. This process is repeated for each bin $v$. Thus, the distribution of the frequency of occurrence of the local complexity indicator across all datasets $p_i$ is captured by the bins $v$ that correspond to the neighborhoods $k$.

The term $blqi^2$ helps to avoid boundary effects. $blqi^2$ is generally optional. Here, each neighborhood is only considered once. This is relevant for neighborhoods of datasets having input datapoints at an edge of the input space. This is illustrated in FIG. 1B. FIG. 1B shows the plot 81 of the same datasets as FIG. 1A. However, the KNN neighborhood with k=19 is highlighted for another dataset (large dark circle). The neighborhoods in FIG. 1A and FIG. 1B are the same. Thus, they would yield the same value for MLQI2. By using BLQI2 the MLQI2 is only determined once for all identical neighborhoods and only used once in subsequent calculations, by the appropriate bookkeeping.

The BLQI2 is determined as follows:

$$blqi^2[i,k](P) = \begin{cases} 1, & \forall j < i | KNN_{re}(P, p_j, k) \neq KNN_{re}(P, p_i, k) \\ 0, & sonst \end{cases}$$

$$(4)$$

SHLQI2 is a normalized version of HLQI2 (normalized to [0|1]:

$$shlqi^2[v,k](P) = \left( \frac{hlqi^2[v,k](P)}{\sum_{s=1}^{|P|} hlqi^2[s,k](P)} \right)^{gamma_{hi}}$$

$$(5)$$

Here $gamma_{hi}$ denotes a gamma calibration of the histogram to clearly show every indicator even if there is a huge difference in the number of datasets stored in different bins. It only serves a better visualization.

As will be appreciated, both HLQI2 as well as SHLQI2 describe the frequency of occurrence of certain local complexity indicators across all datasets. They are array data structures and a first array dimension resolves the multiple neighborhood based on their sizes (e.g., increasing values for k-nearest neighbors); and a second array dimension resolves respective local complexity indicators (e.g., in discrete bins). Entries of the array data structure are indicative of the frequency of occurrence of the local complexity indicators across all datasets. The data structure can also be structured differently, e.g., as a tree data structure. Hereinafter, examples will be described in connection with an implementation of the data structure as array, but similar techniques can be readily applied for other implementations of the data structure.

These data structures help to quickly and comprehensively assess multiple datasets, even where the count of the datasets is large, e.g., larger than 100 or larger than 10,000 or even larger than 1,000,000. Specifically, it is possible to assess datasets that include input data points and output data points associated with the processing of an intermediate layer of a neural network, as explained above.

FIG. 2 schematically illustrates a computing device 90 according to various examples. The computing device 90 could be a personal computer or a server. The computing device 90 includes a processor 92 and the memory 93. The computing device 90 also includes a communication interface 91. The processor 92 may be a graphics processing unit (GPU) comprising multiple compute units operating in parallel. It would be possible that the computing device 90 includes multiple GPUs in parallel for distributed processing. A TPU can be used.

The processor 92 can load, via the communication interface 91, a plurality of datasets from the database 99. The plurality of datasets could also be retained in a local memory 93.

The processor 92 can load program code from the memory 93 and execute the program code. The processor, upon loading and executing the program code can perform techniques as disclosed herein, e.g.: enabling assessment of a plurality of datasets; enabling assessment of a machine-learning algorithm; generating a data structure, e.g., SHLQI2; controlling operation of a technical system, e.g., a train, etc.

Various techniques are based on the finding that the SHLQI2 is a powerful tool to identify abnormal structures. Based on such abnormal structures, it is possible to draw inference regarding the complexity and quality of a plurality of data sets. In particular, various examples are based on the finding that the SHLQI2 can be used to perform a layer-wise assessment of a neural network, to thereby assess the operation, quality and complexity of the neural network (or another layer-based machine-learning algorithm). Such a layer-based approach is of particular interest, as it allows the entire structure of the processing pipeline to be broken down and each processing step to be analyzed. Through this type of analysis, the most accurate definition of the solution strategy and processing of the system can be determined. Furthermore, runtime monitoring is possible with the help of the QI$^2$ based on learned abstract concepts. Here, the aspect of trustworthiness in particular is a decisive feature.

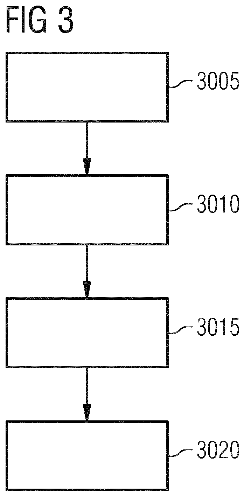

FIG. 3 is a flowchart of a method according to various examples. FIG. 3 generally pertains to assessing a plurality of datasets. The method of FIG. 3 enables to assess a neural network.

The method of FIG. 3 can be executed by a processing device. The method of FIG. 3 can be executed by a processor upon loading and executing program code that is stored in a memory. For example, the method of FIG. 3 can be executed by the processor 92 upon loading and executing program code that is stored in the memory 93 (cf. FIG. 2).

At box 3005, a plurality of datasets is obtained.

Obtaining the plurality of data sets can include loading the plurality of data sets from a memory or database. Obtaining the plurality of data sets can also include obtaining the plurality of data sets from a neural network such as a U-Net convolutional neural network. Obtaining the plurality of data sets at box 3005 can include determining each data set of the plurality of data sets.

The plurality of datasets can be associated with an intermediate layer of the neural network algorithm.

The intermediate layer processes input data (also referred to as input feature maps) that is obtained by processing root data using an input layer of the neural network algorithm and, optionally, one or more upstream intermediate layers of the machine-learning algorithm. The root data, hence, is the data that is input to the neural network algorithm. For instance, the root data could be an image, e.g., a 2D image acquired using a camera. Other implementations for the root data are possible, e.g., data from LIDAR or radar sensors data, etc.

A selection of the intermediate layer for which the plurality of data sets is obtained can be made. In particular, a relevant layer can be selected from amongst all intermediate layers. Typically, information is particularly valuable that are primarily responsible for solving the task of the neural network.

In particular, the intermediate layer can be a convolutional layer. A convolutional layer processes a kxk patch into a single output pixel. Thus, each input data point of multiple data sets associated with the intermediate convolutional layer has a dimension of $k \times k \times x$ ($k$: Kernel size , $x$: depth of input feature map). Each output data point has a size of $1 \times 1 \times y$ ($y$: output feature map depth). The different input data points of the plurality of data sets result from the kernel of the layer being iteratively pushed over the input feature map and an output is calculated for each new input. The number of data points is

$$o = \frac{(i-k+2p)}{s} + 1$$

based on the number of pixels in the output of the layer. The size of the output of a layer is given by ($o$: pixel of the output, $i$: pixel of the input, $k$: kernel size, $p$: padding, $s$: stride). One output data point /data set can be generated for each output pixel. However, the relatively high resolution in early layers of the network can lead to a very high number of data points. This can be remedied by an additional factor, which specifies the distance at which data points are generated on the X and Y axes.

At box 3010, once the datasets including the input and output datapoints have been determined / obtained, a data structure is determined/constructed based on the datasets. In particular, SHLQI2 data structure can be determined, as explained above.

At box 3015, the data structure of box 3010 is accessed to assess neural network that processes the input datapoints to obtain the output datapoints.

There are various options available for implementing box 3010. For example, it is possible to determine a plot of the data structure. Here, a contrast of plot values of the plot is associated with the frequency of occurrence. For instance, a larger (smaller) frequency of occurrence can correspond to a darker (lighter) grey scale value of a grey scale plot. The plot can then be output via a user interface, e.g., the HMI 94 of the computing device 90. A user can study the plot and based on characteristics of the plot assess the neural network.

In one example, the data structure can be accessed in a coupled manner with one or more XAI techniques. For instance, it would be possible to execute one or more XAI techniques and, based on the one or more XAI techniques control the assessing of the neural network based on accessing the data structure. Also, vice versa, it would be possible to access the data structure and based on such accessing of the data structure configure one or multiple XAI techniques. In particular, the analysis of the SHLQI2 can be combined with the XAI technique referred to as Layer-Wise Relevance Propagation (LRP) technique. See Montavon, Grégoire, et al. "Layer-wise relevance propagation: an overview." Explainable AI: interpreting, explaining and visualizing deep learning (2019): 193-209.

Here, to give an example, one or more entries of the data structure can be selected based on the LRP analysis. Then, these one or more entries of the data structure can be, e.g., highlighted in a plot of the data structure that is output via a GUI to a user. %Claim 2%%

Vice versa, it would also be possible to select certain datasets based on the plot - e.g., of SHLQI2 - and then perform one or more XAI techniques for those datasets. For instance, the LRP can be calculated for input data points that are identified as out-of-distribution candidates based on an appropriate selection of entries of the data structure. This enables a continuous representation of the most critical points together with the LRP for these candidates in one representation. If necessary, only the amounts of the influences are shown, so that a person who supervises the function of the neural network can see where the information for the critical aspects is obtained from.

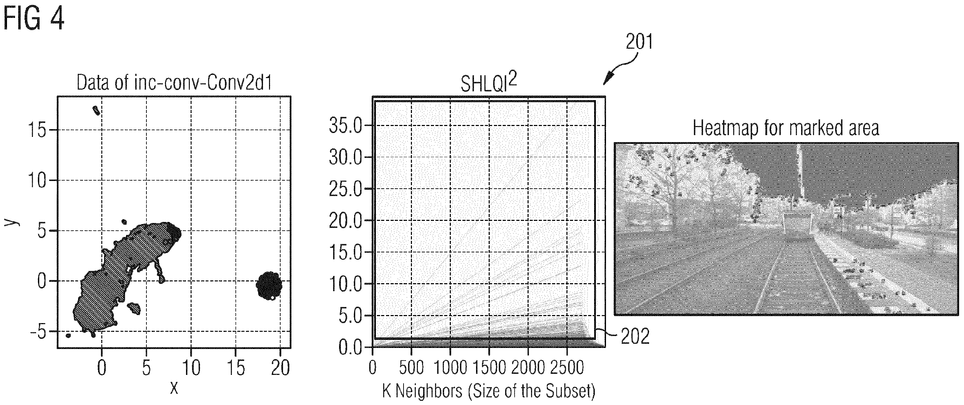

In detail, it would be possible to control the GUI to provide access to the data structure and control the user interface to receive a user selection of a subsection of the array data structure. For example, a user may select a certain part of a plot of the data structure. Then, a subset of the plurality of data sets that is associated with the subsection can be selected in the user interface can be controlled to output information associated with the subset of the plurality of data sets. Such information can be feature relevance information that is determined using one or more XAI techniques such as the LRP. The feature relevance information can be for features of the root data and specify relative contributions of the features to the input data points of the subset of the plurality of data points when processing the root data using the input layer and optionally the one or more upstream intermediate layers of the machine-learning algorithm. %%Claim 3%% Such scenario is illustrated in FIG. 4. FIG. 4, middle illustrates a plot 201 of the SHLQI2 of an intermediate convolutional layer and a respective user selection 202 in the plot 201, i.e., a selection of a subsection of the array data structure underlying the plot 201. FIG. 4, left illustrates the UMap of the input data points thus selected (i.e., in the input feature map of the convolutional layer). For Umap see McInnes, Leland, John Healy, and James Melville. "Umap: Uniform manifold approximation and projection for dimension reduction." arXiv preprint arXiv:1802.03426 (2018). Other techniques to map high dimensional information to fewer dimensions may be equally used. FIG. 4, right, illustrates the feature relevance information of each pixel in the root data - here, an image that is processed - as heatmap. Thus, the relative influence of the various pixels in the input image to the data points in the input data to the intermediate layer identified by the selection 201 is color coded.

From this heat map it is apparent that relevant and non-relevant areas are discriminated. In detail: The analyzed intermediate layer classifies relevant and irrelevant areas based on homogeneous surfaces and their transitions to granular structures. Thus, especially the sky is segmented as irrelevant area, which corresponds to an appropriate solution, because there will never be train tracks (the neural network algorithm has the task to segment train tracks). Furthermore, this solution strategy is target-oriented if one considers the structure of the U-Net and the direct connections from the output of front layers to the input of later layers. By these connections the passing on over this knowledge of the relevant and irrelevant range is made possible. Thus, the network does not need to include these areas in the final segmentation of the path.

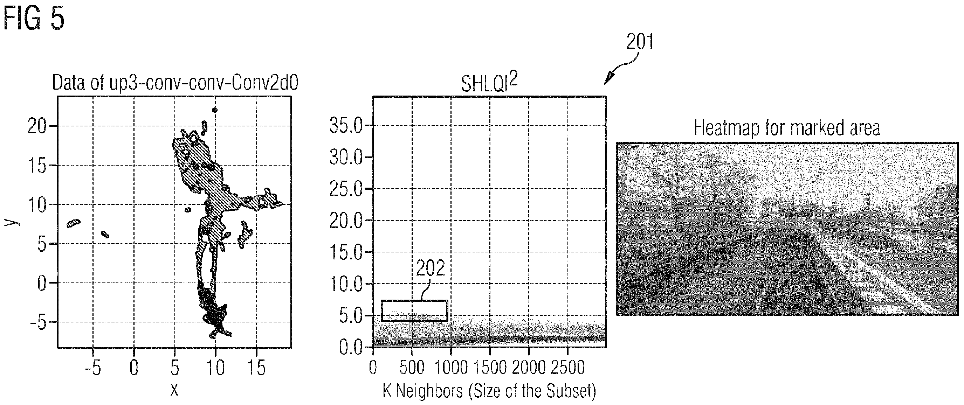

FIG. 5 corresponds to FIG. 4, however, a downstream intermediate convolutional layer is assessed that segments to train tracks. The relevant user selection 202 is illustrated in the plot 201. At the right hand side, it can be seen that all features of relative high complexity - discriminated by the user selection 202 - are situated within the train tracks.

As a general rule, it would be possible to apply a binary mask to select only those input datapoints of the intermediate layer for the XAI analysis that correspond to selected entries in the datastructure. The binary mask can be applied to the output of the intermediate layer and then this output can be processed by the XAI analysis.

As will be appreciated, such XAI analysis is then also layer-centric. This is in contrast to reference implementations which would include an LRP analysis covers the entire processing pipeline back-to-frond for a neural network.

The analysis of FIG. 4 and the analysis of FIG. 5 are mere examples to illustrate the interaction between LRP (other XAI techniques would be equally applicable) and the SHLQI$^2$ to determine feature relevance information for pixels in the input image for specific entries to the data structure selected by the user, i.e., for specific input data points to a given intermediate layer having a certain complexity. Thereby, a layer-by-layer analysis of the respective tasks performed by the hidden layers of the neural network can be executed and visualized. This enables an assessment of the functionality of the neural network.

It is generally possible to repeat boxes 3005, 3010, 3015 for different collections of data sets, e.g., for multiple layers of the neural network algorithm. This yields different plots 201 as shown in FIG. 4 vs. FIG. 5.

In general, such assessment can be executed off-line, e.g., based on training data or other data sets processed by the neural network. Such assessment can also be executed during inference, in an automated manner.

Based on such assessment of the neural network algorithm, the prediction reliability of the neural network algorithm can be determined during inference. I.e., predictions made by the neural network algorithm can be monitored. This may be referred to as runtime monitoring. Runtime monitoring is only an option. In other examples, off-line assessment of the trustworthiness or XAI analysis of predictions made by the neural network algorithm can be executed.

As explained above, one conceivable application of the $SHLQI^2$ is to monitor to what extent an output of the network is trustworthy, i.e., determine a reliability of the prediction. When generating an output based on an input within a network, many possible causes can cause a faulty relationship, i.e., reduce the trustworthiness. For example, causes such as OoD (Out of Distribution) input or adversarial input can already occur during input, but causes such as bit tippers, jump points, etc. can also generate incorrect input/output combinations during processing of the network. These faulty or untrustworthy outputs can then be intercepted and counteracted during operation of the neuronal network.

As a general rule, based on said assessing of the neural network algorithm (executed during inference), it would be possible to selectively transition a system that is controlled depending on the prediction provided by the neural network into a safe state (cf. FIG. 3: box 3020).

One possible application of the $SHLQI^2$ to determine the trustworthiness of a prediction of the neural network algorithm above is to monitor neuron activities within the network based on the SHLQI2 during inference. Neuron activities are high-dimensional and abstract images of the input on an intermediate layer (hidden layer) of the network. They are therefore a direct learned abstraction of the input and provide information about possible problems in the processing. If the input to be processed is clearly distinguishable from all learned concepts (features), this is visible on at least one intermediate layer. For example, it is conceivable that the binary activation of one or more ReLu (Rectified Linear Unit) layers or a binary represented activation of a Convolultional Layer is used as the basis for determining the trustworthiness:

$$f(x) = \begin{cases} 1, & x > 0 \\ 0, & \text{else} \end{cases}$$

Alternatively, the actual activation of the convolutional layers may be used.

Alternatively or additionally, it is conceivable to consider the neuron activities of the different layers individually and to check them against each other or to use a combination of the neuron activities. However, it is generally preferable to choose one or more layers that have a high, but not too high number of different features. If there are too few features, there is the problem that the learned concepts in the layer are not represented to a sufficient degree by recurring combinations or structures in the features. If the number of features is too high, there is the problem of "fluency of dimensions".

The simplest conceivable application of this check is in the single class classification of an image, for example (e.g., "hotdog" or "not hotdog" classification of input images). Here, the first linear layer can be assessed as intermediate layer for which the data structure is constructed. Consequently, the decision of the network is based on the abstract vector and thus on a high dimensional representation of the input image. Thus, for each class a certain pattern, structure or distribution of values in this abstract space is necessary. These can then be checked in the application.

Beyond such binary classification tasks, the disclosed techniques can be applied to segmentation networks which do not have a linear layer for the decision on a class. Here the networks are usually built up only from convolutional layers. Thus, for the monitoring of this network type one or more intermediate convolutional layers can be selected and a respective data structure (SHLQI2) can be generated for each of the one or more intermediate layers. In such example, it would be possible to check on the basis of uncertain class-specific output pixels, and/or check based on random sampling of feature maps, and/or check based on significant areas in the output.

Checking trustworthiness using neuron activity requires a ground truth $P_{GT}$. The ground truth can be recorded after the training process by iterating a collection of root data through the network. In this process, depending on the type of task and strategy of testing (described above), samples from the corresponding hidden layers with associated class are stored as input-output tuples. I.e., a plurality of datasets can be recorded in the training process and retained for assessment during inference. Here a unique reference from feature to output must be guaranteed.

This $P_{GT}$ represents the learned concepts of the network and assigns the correct classes. Next, the $SHLQI^2$ ($SHLQI^2_{GT}(P_{GT})$) is calculated for the data set and the first x nearest neighbors to each data point. This data structure is used at runtime as a basis for checking the output.

In other words, it is possible to retain a representation of the training data as well as the data structure determined based on the training data. Then, based on an inference input datapoint (i.e., an input datapoint obtained during inference for which ground truth is not available) and the associated inference output datapoint predicted by the respective intermedia layer based on the inference input datapoint, it is possible to determine the trace of local complexity indicators for neighborhoods of the inference input datapoint.

Assuming the network is sufficiently and correctly trained and meets the requirements of a conceptual detection of classes, as well as sufficient quality assurance of the $P_{GT}$, it can be assumed that the concepts formed represent the trained domain. Under this assumption, this dataset and the associated $SHLQI2_{GT}$ can be used to perform an evaluation of new inputs at inference and their associated output of the network.

Here, several options exist for verification: First, verification based on all pixels in an uncertainty range (confidence or output value dependent). Second, verification based on randomly selected pixels. Third, verification based on random pixels of the identical class. Fourth, checking based on neuron activities that would steadily produce different outputs across different layers at the identical location in the raw data (e.g., same area of the camera image in the input image?) in the output. The neighborhoods of the neuron activities to be selected per layer constantly show different classes based on the neuron activity.

In these checks, as in the $P_{GT}$ generation, a unique reference from feature to output is used.

In detail, the determining of the trustworthiness is then based on a comparison of the new data point (current input to the intermediate layer at runtime) $p_{new}$ with $P_{GT}$. Such comparison can be based on a trace of local complexity indicators determined for the new data point $p_{new}$. In detail, local complexity indicators can be determined for multiple neighborhoods of the inference input datapoint obtained during inference. These multiple neighborhoods are defined in the input space. The multiple neighborhoods have different sizes, e.g., can be progressively larger. KNN neighborhoods may be selected with increasing k. The k-nearest neighbors of $p_{new}$ are: ($P_k := \{p_1, ..., p_k\}$) (alternatively, other neighborhood criteria may be used, e.g., a distance metric such as Hamming or Euclidean distance); these are considered as new collection of data points $P' := \{p_{new}, p_1, ..., p_k\}$). Any given local complexity indicator is then based on differences between input distances and output distances, the input distances being in the input space between the inference input datapoint and input datapoints of the datasets of the k-nearest neighbors, whereas the output distances are in the output space between the inference output datapoint and the output datapoints of the datasets of the datasets in the respective neighborhood. This yields a trace of local complexity indicators for the inference input datapoint $p_{new}$ obtained during inference. This trace can be labeled $SHLQI2_{new}(P_k)$. This trace can be compared against the traces of the k-nearest neighbors. In detail, for all data points $P_k$ the respective traces in $SHLQI2_{GT}(P_{GT})$ are considered separately $(SHLQI2(P_k))$. This comparison yields the trustworthiness of the new data point. For instance, a difference between the trace $SHLQI2_{new}(P_k)$ and each trace $SHLQI2_{p1}(P_{GT}) ... SHLQI2_{pk}(P_{GT})$ to calculate a trustworthiness score $S_T$. This score indicates how well current input and output of the network match. Summarizing, the reliability of the prediction can be determined by comparing the trace of the local complexity indicators across multiple neighborhoods of a given data point with multiple reference traces. These reference traces can be determined as explained above or stored at the training or be user defined. %%Claim 7%%

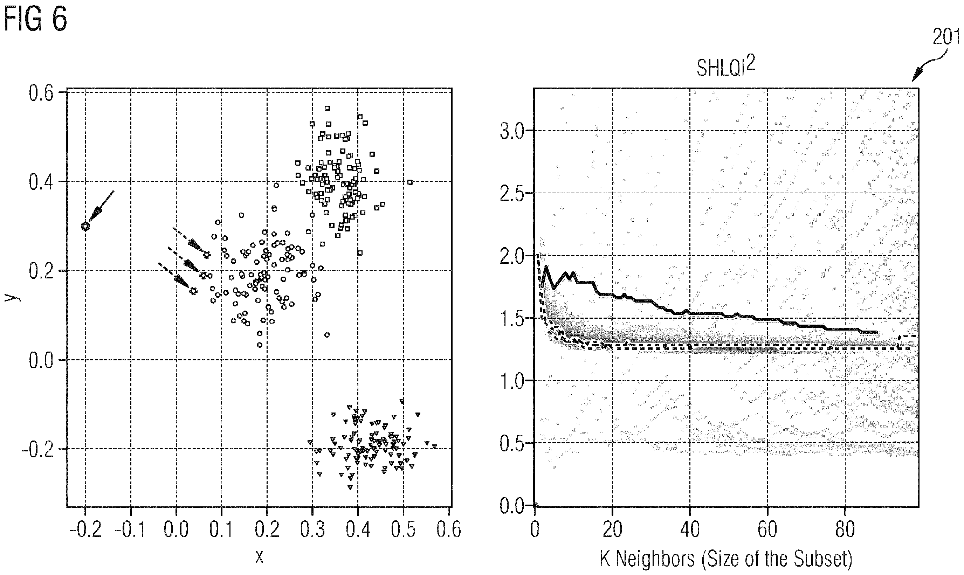

Such comparison between traces of local complexity indicators to determine the trustworthiness is now illustrated for an input data point that is out-of-distribution. An out-of-distribution input datapoint appears to be closest in a k-nearest neighbor algorithm to the same class as the predicted. However, this is clearly outside the covered input in the collection of datasets. Thus, no definite prediction can be made about this input data point, since this input range has not been trained and thus is not abstracted and known. This is illustrated in FIG. 6 on the left. FIG. 6, left shows a 2-dimensional representation of various input data points (x,y) and a shape-coded output (different classes are labeled by circles, squares, and triangles). In this case, let the input data point in each case be a 2-dimensional representation of a high-dimensional neuron activation pattern and the class correspond to the output class in training (ground truth). The input data point marked with the full arrow is out-of-distribution. Additionally, the three nearest neighbors in the collection of data sets (e.g., training data) are marked with dashed arrows.

The right side of FIG. 6 illustrates a plot 201 of the corresponding data structures of the SHLQI2, in particular the traces $sHLQI2_{p_{new}}(P')$ (full line), $SHLQI2_{p1}(P_k)$, $SHLQI2_{p2}(P_k)$ und $SHLQI2_{p3}(P_k)$ (all dashed line). The latter three traces all overlap strongly and are therefore highlighted using a single line. The difference between the dashed line and the full line is visible. This difference is caused by a high normalized input space distance between the out-of-distribution input data point and the other input data points. This difference (e.g., subtraction, mean deviation, variance, etc.) enables to determine that the prediction of the neural network algorithm for the new input data point is unreliable.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For still illustration, techniques have been disclosed in the context of assessing deep neural networks including intermediate layers. Similar techniques can be applied for assessing machine-learning algorithms with step-wise processing of input datasets in different spaces or embeddings.

**Claims**

**1.** A computer-implemented method of enabling assessment of processing of a plurality of datasets in a machine-learning algorithm, each dataset of the plurality of datasets comprising a respective input datapoint in an input space and an associated output datapoint in an output space,

wherein the input datapoints of the plurality of datasets are patches of a predefined size of input data of an intermediate layer of the machine-learning algorithm,
wherein the input data is obtained by processing root data using an input layer of the machine-learning algorithm and optionally one or more upstream intermediate layers of the machine-learning algorithm,
wherein the output datapoints of the plurality of datasets are outputs of the intermediate layer calculated based on the patches,
wherein the method comprises:

- for each dataset of the plurality of datasets:
determining multiple local complexity indicators for multiple neighborhoods of the input datapoint of the respective dataset in the input space, the multiple neighborhoods having different sizes, any given local complexity indicator being based on differences between input distances and output distances, the input distances being in the input space between the input datapoint of the respective dataset and the input datapoints of each of multiple further datasets in the respective neighborhood, the output distances being in the output space between the output datapoint of the respective dataset and the output datapoints of each of the multiple further datasets in the respective neighborhood,
- determining (3015) a data structure comprising at least a first dimension and a second dimension, the first dimension resolving the multiple neighborhoods based on their sizes, the second dimension resolving the local complexity indicators, entries of the data structure being indicative of a frequency of occurrence of the respective local complexity indicator at the respective size of the neighborhoods across all datasets of the plurality of datasets,
- accessing (3015) the data structure to assess the machine-learning algorithm.

2. The computer-implemented method of claim 1,
wherein said accessing of the data structure comprises:

- selecting one or more entries of the data structure based on a further assessment of the machine-learning algorithm based on a Layer-Wise Relevance Propagation technique.

3. The computer-implemented method of claim 1 or 2, further comprising:

- controlling a user interface to provide access to the data structure,
- controlling the user interface to receive a user selection of a subsection of the data structure,
- selecting a subset of the plurality of datasets associated with the subsection, and
- controlling the user interface to output information associated with the subset of the plurality of datasets,

wherein the information is feature relevance information for features of the root data, the feature relevance information specifying relative contributions of the features to the input datapoints of the subset of the plurality of datapoints when processing the root data using the input layer and optionally the one or more upstream intermediate layers of the machine-learning algorithm.

4. The method of any one of the preceding claims,

wherein the machine-learning algorithm is a neural network algorithm,
wherein the intermediate layer is a convolutional layer.

5. The method of any one of the preceding claims,
wherein the root data is an image or other sensor output.

6. The method of any one of the preceding claims,
wherein said assessing of the machine-learning algorithm comprises determining a reliability of a prediction of the machine-learning algorithm during inference.

7. The method of claim 6,
wherein the reliability of the prediction of the machine-learning algorithm is determined based on a comparison of a trace of the local complexity indicators of a given data set in the respective multiple neighborhoods and one or more reference traces.

8. The method of any one of the preceding claims, further comprising:

 - depending on said assessing of the machine-learning algorithm, selectively transitioning a system that is operating based on a prediction of the machine-learning algorithm to a safe state.

9. A processing device comprising a processor and a memory, the processor being configured to load program code from the memory and to execute the program code, the processor, upon executing the program code, being configured to execute the method of any one of claims 1 to 8.

10. A computer program comprising program code executable by a processor, the processor, upon executing the program code, being configured to execute the method of any one of claims 1 to 8.

FIG 1A

81

FIG 1B

81

FIG 2

90

93

94

92

91

99

## FIG 3

3005

3010

3015

3020

# FIG 4

Data of inc-conv-Conv2d1

SHLQI$^2$

Heatmap for marked area

201

202

K Neighbors (Size of the Subset)

EP 4 524 833 A1

FIG 5

Data of up3-conv-conv-Conv2d0

SHLQI$^2$

201

202

K Neighbors (Size of the Subset)

Heatmap for marked area

EP 4 524 833 A1

FIG 6

SHLQI$^2$

201

EP 4 524 833 A1

Europäisches
Patentamt

European
Patent Office

Office européen
des brevets

# EUROPEAN SEARCH REPORT

**Application Number**

**EP 23 19 8018**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SIMON GEERKENS ET AL: "QI2 -- an Interactive Tool for Data Quality Assurance", ARXIV.ORG, CORNELL UNIVERSITY LIBRARY, 201 OLIN LIBRARY CORNELL UNIVERSITY ITHACA, NY 14853, 7 July 2023 (2023-07-07), XP091557770, * abstract; sections: QI2 – The Quality Indicator, Benefits of QI2, Exemplary Data Quality Assurance, MNIST training data quality assurance; Equations 1-10; figures 1-7 * | 1-10 | INV. G06N20/00 |
| A | MIAO XIONG ET AL: "Birds of a Feather Trust Together: Knowing When to Trust a Classifier via Adaptive Neighborhood Aggregation", ARXIV.ORG, CORNELL UNIVERSITY LIBRARY, 201 OLIN LIBRARY CORNELL UNIVERSITY ITHACA, NY 14853, 29 November 2022 (2022-11-29), XP091382295, * abstract; sections 1, 3, 3.1 Algorithm 1; figure 3 * | 1-10 | TECHNICAL FIELDS SEARCHED (IPC) G06N |

-/--

The present search report has been drawn up for all claims

| Place of search | Date of completion of the search | Examiner |
|---|---|---|
| The Hague | 28 February 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 19 8018

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | MONTAVON GRÉGOIRE ET AL: "Layer-Wise Relevance Propagation: An Overview", 10 September 2019 (2019-09-10), ADVANCES IN DATABASES AND INFORMATION SYSTEMS; [LECTURE NOTES IN COMPUTER SCIENCE; LECT.NOTES COMPUTER], SPRINGER INTERNATIONAL PUBLISHING, CHAM, PAGE(S) 193 – 209, XP047520564, ISBN: 978-3-319-10403-4 [retrieved on 2019-09-10] * section 10.2 * | 2 | |
| A | US 2023/289606 A1 (WASCHULZIK THOMAS [DE]) 14 September 2023 (2023-09-14) * abstract; claims 20-38 * | 1-10 | |

TECHNICAL FIELDS
SEARCHED (IPC)

The present search report has been drawn up for all claims

| Place of search | Date of completion of the search | Examiner |
|---|---|---|
| The Hague | 28 February 2024 | Tebbal Barracosa, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 4 524 833 A1

## ANNEX TO THE EUROPEAN SEARCH REPORT
## ON EUROPEAN PATENT APPLICATION NO.

EP 23 19 8018

28-02-2024

| Patent document cited in search report | Publication date | Patent family member(s) | Publication date |
|---|---|---|---|
| US 2023289606 A1 | 14-09-2023 | CN 116324806 A | 23-06-2023 |
| | | DE 102020212235 A1 | 31-03-2022 |
| | | EP 4205047 A1 | 05-07-2023 |
| | | US 2023289606 A1 | 14-09-2023 |
| | | WO 2022069182 A1 | 07-04-2022 |

EPO FORM P0459

For more details about this annex : see Official Journal of the European Patent Office, No. 12/82

**EP 4 524 833 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MONTAVON, GRÉGOIRE et al.** Layer-wise relevance propagation: an overview. *Explainable AI: interpreting, explaining and visualizing deep learning*, 2019, 193-209

- **MCINNES, LELAND** ; **JOHN HEALY** ; **JAMES MELVILLE**. Umap: Uniform manifold approximation and projection for dimension reduction. *arXiv preprint arXiv:1802.03426*, 2018